# EUROPEAN PATENT APPLICATION

(11) **EP 4 651 507 A1**
(43) Date of publication of application: **19.11.2025**
(21) Application number: 25174746.5
(22) Date of filing: 07.05.2025
(51) Int. Cl.: H04N 23/65, H04N 23/60, G06F 1/16, G06F 1/3234, G06F 3/01, G06F 1/3215, H04M 1/72454

(54) **REAL-TIME UNINTENDED PHOTO CAPTURE DETECTION AND CAMERA DEACTIVATION**

(30) Priority: 13.05.2024 US 202463645999 P; 03.03.2025 US 202519068062
(71) Applicant: Apple Inc., Cupertino, CA 95014 (US)
(72) Inventor: CRANE, Neil G., San Francisco (US); CIUREA, Florian, Campbell (US); WASU, Avijit S., Santa Clara (US); KAMAL, Ahmed T., San Jose (US); ZHANG, Buyue, Sunnyvale (US); GAUR, Utkarsh, Millbrae (US); BALLESIO, Marco, Sunnyvale (US); BELZBERG, Gabrielle A., San Francisco (US); WIENS, Alexander J., Campbell (US); HAGEDORN, Joseph A., Palo Alto (US); ZHOU, Yuru, Cupertino, 95014 (US); LEWISON, Jedidiah, Mountain View (US)
(74) Representative: COPA Copenhagen Patents

(57) **Abstract**

In some embodiments, a method for detecting if an application was initiated due to an inadvertent interaction on a user device is disclosed. The method includes analyzing signals from one or more sensors of a user device to identify any obstructions nearby. By examining the media streams, the device can derive metrics indicating whether the cameras are obstructed. The metrics combined with sensor data, can suggest that the launch was due to an unintentional interaction, causing the initiation of a first mitigation operation. This first mitigation operation involves lowering the device's power state and dimming its display. Following the initiation of the first mitigation operation, the user interface is monitored to identify interactions reflecting an intent to launch the application. If a predetermined period elapses without such interactions, confirmation of the inadvertent application launch is made, prompting the execution of a second mitigation operation.

## Description

### CROSS-REFERENCE TO RELATED APPLICATIONS

This application claims the benefit of priority to U.S. Application No. 63/645,999, filed May 13, 2024, titled "REAL-TIME UNINTENDED PHOTO CAPTURE DETECTION AND CAMERA DEACTIVATION", which is hereby expressly incorporated herein by reference in its entirety.

### FIELD OF THE TECHNOLOGY

The present technology pertains to reducing unintentional camera activations, and when the camera is unintentionally activated, closing the camera application to cease frame capture by the device.

### BACKGROUND

User devices have become increasingly integrated into everyday life, serving as indispensable tools for communication, productivity, and entertainment. Cameras are commonly integrated into these user devices which means users almost always have a camera with them. These cameras and camera application are convenient and easy to use.

### BRIEF DESCRIPTION OF THE DRAWINGS

Details of one or more embodiments of the subject matter described in this disclosure are set forth in the accompanying drawings and the description below. However, the accompanying drawings illustrate only some typical embodiments of this disclosure and are therefore not to be considered limiting of its scope. Other features, embodiments, and advantages will become apparent from the description, the drawings, and the claims.
FIG. 1 illustrates an example device affected by unintentional access to an application in accordance with some embodiments of the present technology.
FIG. 2 illustrates an example architecture for detecting an unintentional camera launch and using the results of this detection to determine whether an application should be allowed to be launched, or if the application is already launched, whether it should remain launched in accordance with some embodiments of the present technology.
FIG. 3 illustrates an example flowchart for a post-application-launch determination of whether the application was launched as a result of an unintentional user-device interaction according to some embodiments of the present technology.
FIG. 4 illustrates a process for detecting that an application was launched as a result of an unintentional user-device interaction in accordance with some embodiments of the present technology.
FIG. 5 illustrates a process for launching a media capturing device in accordance with some embodiments of the present technology.
FIG. 6 is a system diagram illustrating a device in accordance with some embodiments of the present technology.
FIG. 7 shows an example computing system for implementing certain embodiments of the present technology.

### DETAILED DESCRIPTION

Various examples of the disclosure are discussed in detail below. While specific implementations are discussed, it should be understood that this is done for illustration purposes. A person skilled in the relevant art will recognize that other components and configurations can be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an example in the present disclosure can be references to the same example or any example; and such references mean at least one of the examples.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which can be exhibited by some embodiments and not by others.

The terms used in this specification generally have their ordinary meanings in the art, within the context of the disclosure, and in the specific context where each term is used. Alternative language and synonyms can be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles can be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

User devices, including mobile devices, tablets, and similar gadgets, frequently incorporate cameras that can be easily activated via interactions with the user interface or the device itself, either through software buttons on the interface or physical buttons on the device. However, in certain scenarios, such as when stored in confined spaces like pockets or bags, these buttons may inadvertently interact, leading to unintended application launches. In the case of camera applications, the widespread availability of cameras on user devices also introduces privacy concerns stemming from unintentional camera activation scenarios caused by unintended user interface inputs. Such unintentional camera activations pose risks of unintentional collection of video, audio, and images, potentially compromising user privacy or capturing events the user prefers not to digitally record or capture. Additionally, the limited battery capacity of devices can be drained due to inadvertent access to applications that can consume significant battery power.

The disclosed technology addresses the need in the art for reducing unintentional camera activations, ensuring that when the camera is unintentionally activated, the camera application is promptly closed to halt frame capture by the device. The disclosed technology includes methods for application launch suppression to minimize the unintended launching of applications that could compromise user privacy and device battery life. The disclosed technology can receive an indication that an application has launched, and one or more media capturing devices on the user device are actively capturing frames of its surroundings. Metrics obtained from one or more media capturing devices in conjunction with other sensors such as proximity sensor, gyro, and an accelerometer can determine if the application launch was unintentional. Once this determination is made, a first mitigation action is triggered, which may include but is not limited to reducing the device's power state and dimming the display, while allowing the application to continue running. Following the initiation of these mitigation actions, the user interface is diligently monitored to identify interactions reflecting an intent to launch the application or capture frames. Should a predetermined period elapse without such interactions, confirmation of the unintended application launch is made, prompting the execution of a second mitigation operation. This operation comprises reversing the application launch and reducing the user device's power consumption to a predefined level, ensuring optimal device performance and safeguarding user privacy.

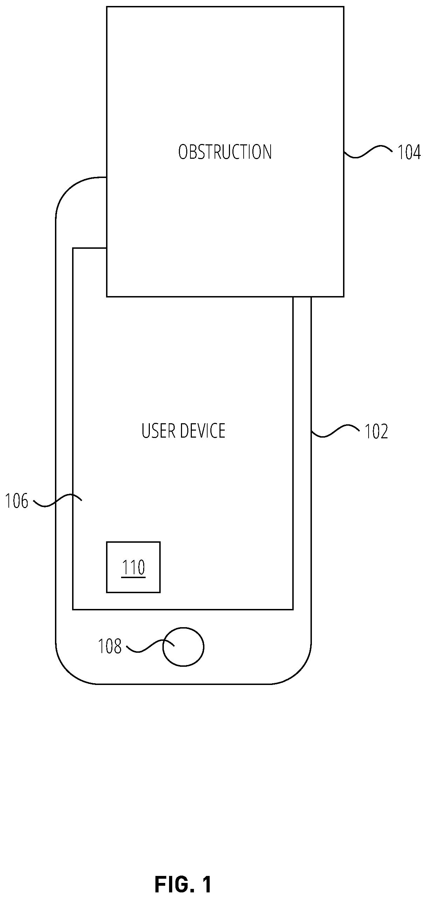

FIG. 1 illustrates an example device affected by unintentional access to an application in accordance with some embodiments of the present technology.

In some examples, a user device 102 can unintentionally be interacted with to open an application, whether through accidental activation of a physical button 108, software button 110, unintentional taps on display 106 of user device 102, or other unintentional interactions. These interactions can lead to the launch of applications, causing the user device 102 to assume that the launch was initiated by a deliberate user interaction with the intent to engage with the launched application. Such unintentional activations can occur due to the sensitivity of touchscreen interfaces on a display 106, the protrusion of physical buttons 108 on the user device 102 exterior, or external factors such as pressure or movement while the user device 102 is in transit or being carried.

When unintentional interactions are detected, user device 102 may initially take action to prevent the application from launching. This action may be triggered by the initial detection from one or more sensors of user device 102, which makes an initial determination that the user is not currently interacting with user device 102. Alternatively, user device 102 may implement preventative measures to perform a verification of user interactions before proceeding with the application launch. These measures could involve requiring additional confirmation, such as a secondary input or authentication, to ensure that the user's intent to launch the application is confirmed before proceeding. By implementing these proactive measures, user device 102 aims to mitigate the risk of unintended application launches.

However, even with such proactive measures to prevent applications from launching unintentionally, applications can sometimes launch, leading to the unnecessary utilization of device resources, such as memory, battery, and cellular data, without user intent. For instance, in scenarios where the camera application is unintentionally activated while user device 102 is in a pocket, user device 102 can conduct a detection process to determine whether the activation was initiated by a deliberate user interaction or not.

In the process of detection, the operating system extracts data from sensors, such as a proximity sensor, an accelerometer, and a gyroscope, to discern user device 102 state. The accelerometer provides inertial measurements, while the gyroscope captures rotational data, enabling the identification of distinct movement patterns and device orientation, particularly indicative of a pocketed condition. Additionally, some user devices utilize a proximity sensor to detect the proximity of the device, particularly the display, to a surface or another object that is obstructing the view of one or more cameras of the user device 102.

In scenarios where a camera's view is physically blocked by objects like a hand, finger, or another obstruction, the device's camera system can identify the obstruction, by analyzing the camera's video feed to detect changes in the image features, enabling real-time identification of blockages or other obstructions. Upon identifying an obstruction, the system can trigger responses such as sending alerts or notifications to the user, ensuring that the device's camera is able to capture clear, unobstructed images and maintain performance of camera-based features.

Upon detecting an object in close proximity, one or more of the sensors of user device 102 can deactivate the display and touchscreen to prevent unintentional inputs. Furthermore, the proximity sensor can collaborate with the ambient light sensor to adjust display brightness according to environmental conditions. Proximity sensors can serve to automatically disable display and touch functionality when the device is brought close to the user's face during calls.

FIG. 1 illustrates an example of an operating environment for the user device 102 where an unintentional application launch can occur. An obstruction 104 caused by accidental user device 102 handling, such as picking up or setting down the user device 102, can be detected by the proximity sensor. In scenarios where the proximity sensor is triggered by a surface or object during these motions, the sensor may interpret it as an obstruction, even if the user device 102 is not in a pocket or bag. Despite this temporary obstruction 104, an application may still unintentionally launch. This accidental detection can occur when the user device 102 is quickly moved, and the proximity sensor fails to distinguish between intentional handling and accidental blockages, leading to unintended application activations. When an application, such as a photo or video capture app, is launched, the media streams received from the capturing devices (e.g., cameras) are analyzed to determine whether the camera is pointing at an obstructed scene, such as inside a pocket.. In cases where no discernible subject is detected, and the obstruction 104 is visible, a determination is made that the application was launched due to an unintentional interaction with the user device 102 physical button 108, software button 110, display 106, or other components. For instance, if obstruction 104 is determined to be a pocket, the user device 102 recognizes its placement within a pocket and infers the lack of direct user possession. In response, one or more mitigation operations can be executed, causing the user device to reduce power states of the user device, and close the application upon determining that the application was launched as a result of an unintentional user-device interaction.

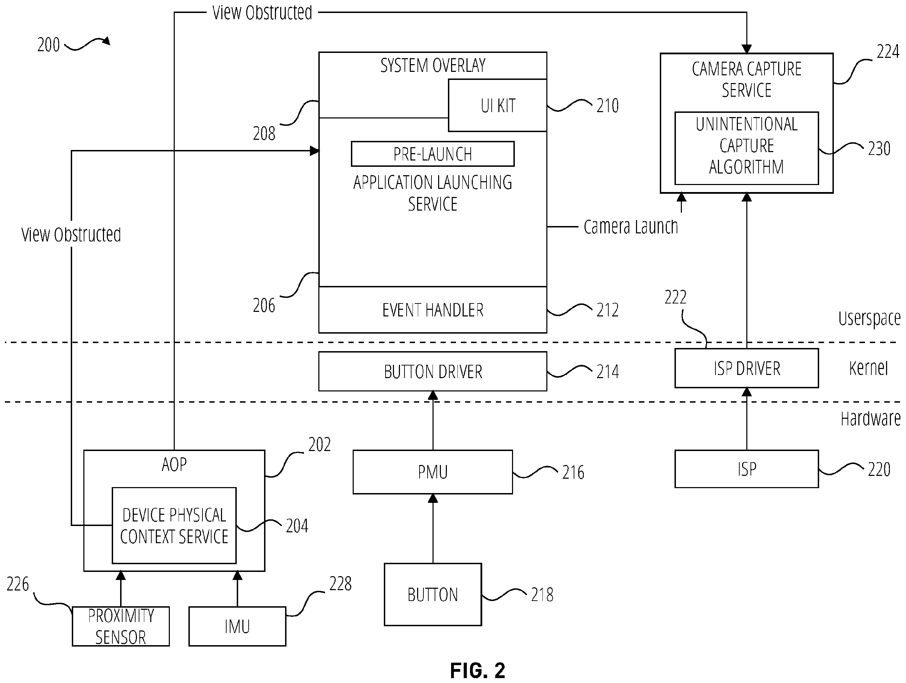

FIG. 2 illustrates an example architecture 200 for detecting an unintentional camera launch, and using the results of this detection to determine whether an application should be allowed to be launched, or if the application is already launched, whether it should remain launched in accordance with some embodiments of the present technology.

A device physical context service 204 can be executed by an always-on processor (AOP) 202 to detect when a user device is in a pocket before, during, and after the launch of an application. The AOP 202 is responsible for managing certain low-power tasks even when the main processor (CPU) is in a low-power state or sleeping. By using this device physical context service 204, the AOP 202 can determine whether it should wake up the main processor or manage power delivery to various components upon activation of an application or detection of user interaction. One process handled by the AOP 202 includes a device context framework that can repeatedly store motion states and proximity states. These states can be stored to trigger actions by the device, such as waking up the display, or be referenced by applications when they are running.

For example, the device physical context service 204 on the AOP 202 can receive a motion or proximity state from the proximity sensor 226 and inertial measurement unit (IMU) 228. The IMU 228 is a hardware component of the user device that consists of sensors including accelerometers, gyroscopes, and magnetometers. Each of these sensors works together to measure the device's motion, orientation, and rotation of the user device in different states, whether in the physical possession of the user or in a storage location. The proximity sensor 226 can be placed on the front and/or back of the user device to detect proximity of the device (often the display or camera) to a surface (such as a user's face or a pocket lining or table surface). Data from proximity sensor 226 in addition to the IMU 228 can be used by device physical context service 204 to detect whether the device is inside of a pocket.

Before initiating an application launch, the operating system's application launching service 206 can leverage the motion and/or proximity state provided by the device physical context service 204 to determine whether to proceed with the application launch or activate an application behavior designed to verify the user's intention. The signal received from the IMU 228 and the proximity sensor 226 serve as indicators of the presence of an obstruction in close proximity to the user device. For example, if the device is detected to be in a static, facedown position, a determination is made that the application was launched due to an unintentional interaction with the user device's physical button 108, software button 110, display 106, or other components. The application launching service 206 identifies this scenario as accidental and prevents the application from launching, ensuring that unintentional device interactions do not lead to unwanted application activity. Upon determination that the initiation of the launch is intended, or at least a determination was not made that the application was launched as a result of an unintentional user-device interaction, the application launching service 206 can launch the application, and initiate the camera capture service 224. The camera capture service 224 can be a part of a camera application.

In an example where the application has already launched, the unintentional launch algorithm 230 can determine that the application was launched as a result of an unintentional user-device interaction. This scenario can occur when a user unintentionally activates the camera while placing the device 102 into their pocket, causing the camera to launch before becoming obstructed. Similarly, accidental activation can happen when the device is set down on a desk, unintentionally triggering the camera. As a result, the camera application launches and starts streaming or previewing frames while the device is in the user's pocket, leading to unintended media capture. Upon receiving signals from the proximity sensor 226 and the IMU 228 providing metrics that an obstruction may be present, the device physical context service 204 can determine that the view is obstructed and send a signal to the camera capture service 224. The camera capture service 224 can activate one or more cameras on the user device to generate media streams, allowing verification of whether the camera is capturing a valid scene or focusing on an object of interest. In some examples, the camera capture service can utilize the object or scene of potential interest to identify user interactions that includes analyzing gestures in the view of the media capturing devices to distinguish between intentional and inadvertent interactions. The camera capture service 224 can receive a signal from the Image Signal Processor (ISP) 220 via an ISP driver 222. The ISP 220 processes image data captured by one or more cameras of the user device and provides them to the camera capture service 224. The unintentional capture algorithm 230 can utilize the image data from the ISP 220 to determine that the application was launched as a result of an accidental activation when the device is set down on a desk or in a pocket, unintentionally triggering the camera.

In some examples, the unintentional capture algorithm 230 can determine that the application was launched as a result of an accidental activation in accordance with one or more accidental launch policies. These policies can leverage sensor-based inputs and contextual decision-making, include static detection logic, orientation-based logic, and rules addressing multiple or repeated button presses.

Static detection-based logic is configured to suppress button clicks when the device is identified to be in a static state. This state is determined using gyro and accelerometer sensors, which detect the lack of significant motion. To prevent accidental button presses that may occur when a user picks up the device, the suppression continues for a brief period after the static state ends. If a button press is blocked under this logic, the user is notified with an on-screen message near the button, indicating the need for a secondary click to initiate the camera application.

Orientation-based logic adds nuance to click suppression by incorporating the device's detected orientation. Using accelerometer and gyroscope data, the logic can identify whether the device is in a portrait or landscape orientation. In cases where the static detection logic might erroneously suppress intentional clicks, such as when the device is mounted on a tripod, orientation signals can override static suppression to allow the camera button to function as intended.

The accidental launch policies further address accidental activations caused by simultaneous multiple button presses. For example, users may inadvertently press the camera button with their palm while interacting with adjacent controls, such as volume buttons. In such scenarios, the logic detects concurrent activations and rejects the camera button press to prevent unintentional launches.

To accommodate user behavior and reduce frustration from unintended suppression, the system employs repeated button press detection. If a second press follows a suppressed button click within a short time frame, such as five seconds, the policy causes the unintentional launch algorithm to recognize this as intentional and proceed to launch the camera application.

In one example, the launching of the application can be initiated by an interaction detected with a button 218. The button 218 can be a physical button or a software button. The power management unit (PMU) 216 can receive a signal from the button 218. The PMU 216 is responsible for managing the power consumption and distribution within the user device and regulating the voltage and current supplied to different components of the device. The PMU 216 can send a signal to the button driver 214. An event created from the interaction with the button 218 can be managed by the event handler 212 in the application launching service 206. The event handler 212 is configured to provide the event handling and input management for user interactions with the device's interface, such as touch events, gestures, and other inputs from the user, and relaying them to the appropriate applications or system components, such as the application launching service 206, the UI Kit 210, or the system overlay 208.

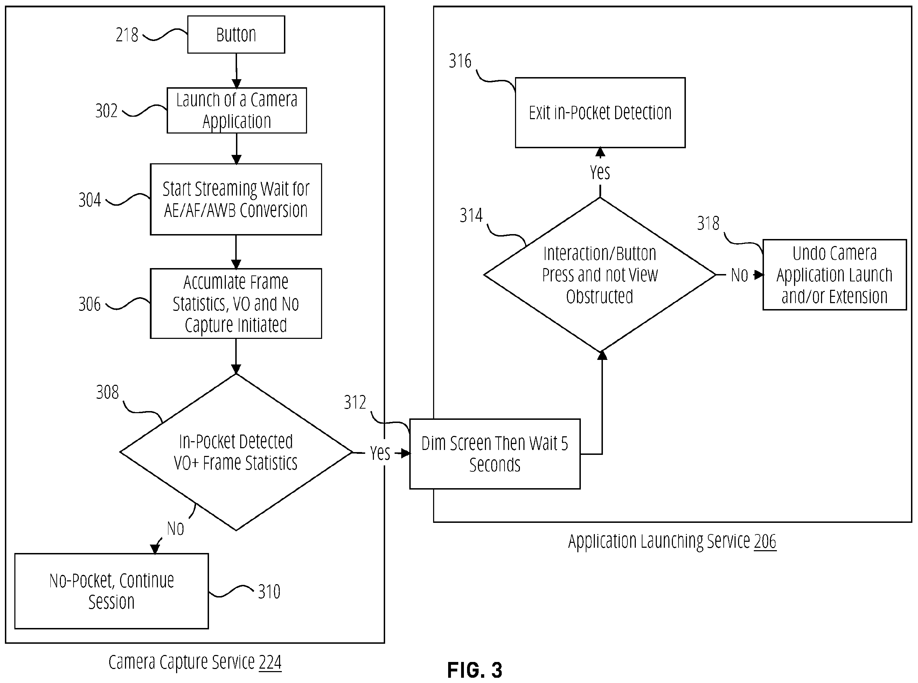

FIG. 3 illustrates an example flowchart for a post-application-launch determination of whether the application was launched as a result of an unintentional user-device interaction according to some embodiments of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

In some embodiments, a button 218 on the user device is pressed, which causes the launch of a camera application 302. Once the camera application has been launched, any active camera on the user's device can begin streaming. For example, the front or back cameras (or both) will start streaming for a period while waiting for AE/AF/AWB conversion 304. The period can be several seconds, for example, 1 sec, 3 sec, 6 sec, 9 sec, etc. During this period, the camera stabilizes values used for auto exposure, auto focus, and auto white balancing, and the camera application may determine which camera is intended for use by the user.

Once the camera is ready for use after the period of stabilization and upon receiving the streams, frame statistics are accumulated 308 before media capture from any of the cameras 306. The frames extracted from the media stream may exhibit characteristics suggesting insignificance of captured content (e.g., being in a pocket, on a table, or not capturing a desired scene). Specifically, unintentional capture algorithm 230 identifies low frequencies indicative of blurry or unfocused imagery, which does not align with desired framing intent. This analysis involves assessing the frequency composition of the frame and establishing thresholds for frequency band distribution.

In some embodiments, a neural network may be used to analyze a frame and determine whether the captured frame was intentional or unintentional (e.g., captured while the device is in a pocket, on a table, or not focusing on a desired scene). The neural network can be pre-trained on a large dataset consisting of labeled examples that include both intentional, well-framed images and unintentional frames, such as those captured when the device is inside a pocket. This network can learn to extract meaningful features from the frame that indicate user intent. Once the neural network is trained, the neural network can be deployed on the device to analyze and classify each frame as intentional or unintentional. The neural network extracts frame features and can accumulate the frames over a period of time to build stream statistics. Frame features and statistics from this neural network can then be used by another machine learning-based classifier or another neural network to assess the significance of the captured content.

The signals captured from the frames include metadata, typically containing statistics from the Image Signal Processor (ISP). These frame statistics can be analyzed before actual user capture begins (i.e., after the camera application has launched but before a user has hit a capture UI button) to assess whether the user's application interactions are intentional or inadvertent when capturing starts. While some of this metadata is computed at a higher layer, a significant portion originates from the ISP at a lower level. During frame processing, the focusing mechanism supplies statistics on focusing success, focusing method, and other pertinent details such as focus distance and any camera switches due to focus issues. These metadata signals, encompassing stability indicators like autofocus stability and exposure stability, are aggregated and employed throughout the camera stack.

The metadata signals ensure the camera is in a converged state before gathering statistics. For instance, the stability signal denotes when the camera achieves stability, facilitating accurate data collection. Additionally, metadata signals such as autofocus position, autofocus location, and the camera in use are utilized during frame processing. Should the camera in use encounter focusing difficulties, an alternative camera can be switched to for further focusing attempts. By the camera being in a converged state, reliable data can be acquired from the cameras when determining whether an obstruction is being experienced by the user device. The camera needs to be in a converged state to get reliable data out of it.

Furthermore, a first-level indication of estimated light intensity can be utilized, derived from parameters like exposure, noise level, and sensor gain. The estimation from the first-level indication can correlate ambient light conditions with the user device being present within the user's pocket. Accordingly, each camera can estimate a quality level based on these parameters, offering valuable insight into the prevailing light intensity during image capture.

In some examples, a machine learning-based classifier, such as a neural network, may utilize aggregated metadata signals in combination with frame features to classify each frame as either intentional or unintentional. The classifier can also leverage metadata and frame features from multiple camera streams concurrently (e.g., combining input from the wide and ultra-wide camera streams) to evaluate the relevance of the captured content and make a more informed determination about the significance of the media. In some examples, the front camera of the user device can be utilized. The front camera can utilize a projection of lasers via LiDAR for facial detection purposes as well as object detection within the viewpoint of the front camera. By utilizing LiDAR the front camera can effectively act as a depth camera and determine a distance measurement to an assumed object in the viewpoint of the front camera. Using the front camera to measure distance makes it possible to determine whether the device is obstructed or placed in a front pocket. Similar to the functionality of a proximity sensor, utilizing the front camera's depth-sensing capabilities provides an alternative method of determining device placement.

In some examples, the front camera could be obstructed, while a back camera or another camera on the user device may not be obstructed. As such, a further determination could be made for both cameras to determine whether or not the user device is obstructed and subject to an interaction. A further determination could be made for both cameras based on their individual states. Additionally, the device may utilize the LiDAR sensor on the back camera to map the environment and assess the presence of obstructions or valid scenes, even in low light or complex environments. The front camera, equipped with structured light technology, can detect and map 3D objects to enhance the user device's ability to distinguish between intentional and unintentional captures.

The frame statistics, including signals, streams, and statistics from the cameras and sensors of the device, are analyzed 308 to determine whether the device is in a static, facedown position. If a determination is made that the application was launched due to an unintentional interaction with the user device's physical button 108, software button 110, display 106, or other components, the application launching service 206 identifies this scenario as accidental. In response, the service prevents the application from launching, ensuring that unintentional device interactions do not result in unnecessary battery drain or unwanted application activity. If the device is not in a static position and no obstruction is detected, the camera session can proceed as normal, capturing the object or scene of potential interest 310.

Upon determining that an obstruction is being detected, a first mitigation is taken where the user device display is dimmed 312. When the screen dimming feature is activated, the user's device can reduce energy consumption. Additionally, the system performs a validation process for 5 seconds to confirm if the button was indeed interacted with by the user. During this time, the user can still initiate interaction with the button or the display before any further mitigation actions are taken 314. If a user interacts with the screen to wake up the screen during the predetermined time period during dimming, then pocket detection/mitigation can be exited 316.

However, absent user-initiated interaction, the original button interaction is considered an interaction. While monitoring for a user-initiated interaction, further analysis can be performed on the media streams to determine if the viewpoint from the camera has continued to be obstructed.

If it is detected that there has been no actual button press or user interaction, and the detection algorithm determines that the device is in a static, facedown position on a desk or within a pocket, the launch of the camera application is canceled, and the camera application or extension launch can be undone 318. Alternatively, if it is decided that further detection is required, the process is repeated to continuously monitor, detect, and analyze the real-time streams.

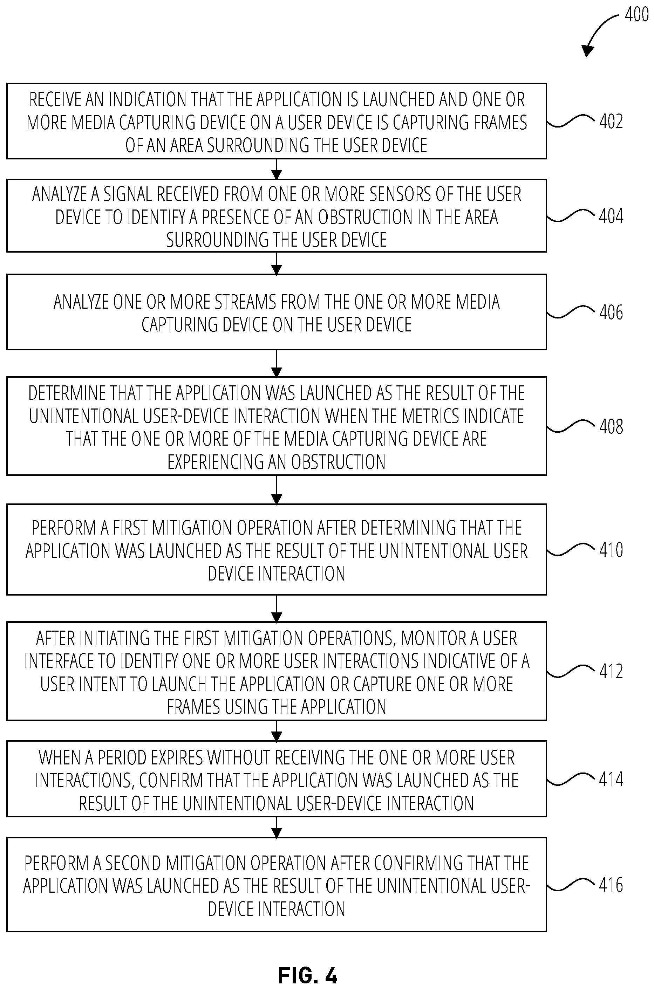

FIG. 4 illustrates an example process 400 for detecting that an application was launched as a result of an unintentional user-device interaction in accordance with some embodiments of the present technology. Although the example process 400 depicts a particular sequence of operations, the sequence may be altered without departing from the scope of the present disclosure. For example, some of the operations depicted may be performed in parallel or in a different sequence that does not materially affect the function of the process 400. In other examples, different components of an example device or system that implements the process 400 may perform functions at substantially the same time or in a specific sequence.

According to some examples, the method includes receiving an indication that the application is launched and one or more media capturing device on a user device is capturing frames of an area surrounding the user device at block 402. For example, the unintentional capture algorithm 230 illustrated in FIG. 2 may receive an indication of an application launch, concurrent with one or more media capturing device capturing frames of the user device's surroundings. This application launch could be prompted by an interaction with a button or application icon displayed on the user device's screen. The one or more media capturing devices encompasses one or more cameras situated across various sections of the user device.

In some examples, a verification can be performed to determine if either of the media capturing devices can be used to check if the view from any of the media capturing devices is blocked. This verification can trigger the unintentional capture algorithm 230, determining if additional actions are necessary to prevent unintended captures. In some instances, a proximity sensor can provide data to detect the presence of an object in close proximity, indicating an interaction that initiated the application launch. Following this, an obstruction detection process is initiated to determine if the application was unintentionally launched due to an obstruction in the device's surroundings.

According to some examples, the method includes analyzing a signal received from one or more sensors of the user device to identify a presence of an obstruction in the area surrounding the user device at block 404. For example, the unintentional capture algorithm 230 illustrated in FIG. 2 may analyze a signal received from one or more sensors of the user device to identify a presence of an obstruction in the area surrounding the user device.

According to some examples, the method includes analyzing one or more streams from one or more media-capturing devices on the user device at block 406. For example, the unintentional capture algorithm 230 illustrated in FIG. 2 may analyze one or more streams from the one or more media capturing devices on the user device. The metrics are derived from an analysis of one or more streams. These streams yield metrics inclusive of metadata linked with one or more media capturing device. The metadata indicates a threshold level associated with detecting an intended scene for capture. Furthermore, identification of a frame containing media captured by the media capturing device and subsequent extraction of frequencies from the media within the identified frame is conducted. The frequencies are scrutinized to determine if one or more of the frequencies meet one or more thresholds. Upon identifying that at least one of the frequencies has met some criteria related to the one or more thresholds, a determination can be made that the content in the frame is insignificant, at least from a photo capture perspective. This determination can suggest that the application was launched as a result of an unintentional user-device interaction.

According to some examples, the method includes determining that the application was launched as the result of the unintentional user-device interaction when the metrics indicate that the one or more of the media capturing device are experiencing an obstruction at block 408. For example, the unintentional capture algorithm 230 illustrated in FIG. 2 may determine that the application was launched as the result of the unintentional user-device interaction when the metrics indicate that the one or more of the media capturing device are experiencing an obstruction. The metrics derived from the one or more streams additionally encompass an estimated light intensity, which is calculated from various parameters such as exposure, noise level, and sensor gain detected within the streams. These parameters serve to associate the metrics with a quality level indicative of the streams' overall performance. Furthermore, the metrics extracted from the streams involve assessing whether the parameters meet one or more thresholds. Upon identification that a parameter criterion has been met by one or more of the parameters, a determination can be made that an obstruction may be obstructing the field of view of the media capturing device.

According to some examples, the method includes performing a first mitigation operation after determining that the application was launched as the result of the unintentional user device interaction at block 410. For example, the unintentional capture algorithm 230 illustrated in FIG. 2 may perform a first mitigation operation after determining that the application was launched as the result of the unintentional user device interaction. The first mitigation operation comprises reducing a power state of the user device to a first power state, and dimming a display of the user device. Reducing the power state of the user device to a lower level as part of the first mitigation operation entails adjusting various components and functionalities to operate at lower power consumption levels. This adjustment effectively reduces the amount of battery usage, and the overall battery load applied to the launched application. By optimizing power usage, the user device minimizes the strain on its battery and conserves energy resources. Consequently, this action aids in mitigating the potential impact of unintentionally launched applications on battery life, ensuring efficient utilization of power while maintaining essential device functionalities.

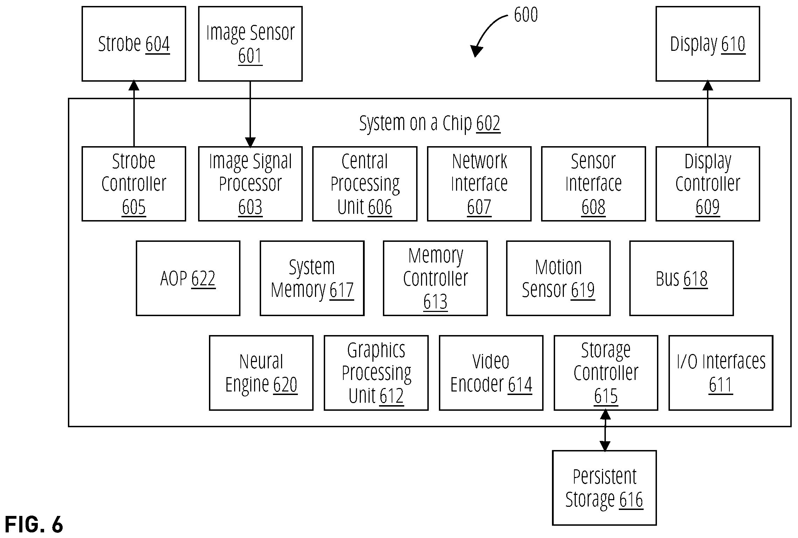

In addition to the first mitigation operation providing the user device a power reduction due to the lower level power state, the central processing unit 606, as shown in FIG. 6, can dim the display 610 to strategically gauge the user's response upon observing the dimmed display 610. By dimming the display, the central processing unit 606 aims to ascertain whether the user will engage further with the device or take action in response to the change in screen brightness. This verification process can assist with determining the user's level of interaction and inform the central processing unit 606 of subsequent actions or adjustments to the device's operation performed by the user.

According to some examples, the method includes, after initiating the first mitigation operation, monitoring a user interface to identify one or more user interactions indicative of a user intent to launch the application or capture one or more frames using the application at block 412. For example, the unintentional capture algorithm 230 illustrated in FIG. 2 may after initiating the first mitigation operations, monitor a user interface to identify one or more user interactions indicative of a user intent to launch the application or capture one or more frames using the application. Also, the analysis of the one or more streams from the media capturing device persists even after the first mitigation operations to detect any emergence of an object or scene with potential interest. Confirming that the application launch stemmed from an unintentional user-device interaction entails the expiration of a designated period without user interaction, coupled with the absence of the identified object or scene within the streams. The monitoring of the streams to discern user interactions encompasses scrutinizing gestures detected by the media capturing device to differentiate between intentional and unintended interactions. Concurrently, the unintentional capture algorithm 230 waits for user interface interactions with physical or software buttons to ascertain the user's intent to launch the application or capture frames using the application.

According to some examples, the method includes when a period expires without receiving one or more user interactions, concluding that the application was probably launched as the result of the unintentional user-device interaction at block 414. For example, the unintentional capture algorithm 230 illustrated in FIG. 2 may conclude, when a period expires without receiving the one or more user interactions, that the application was probably launched as the result of the unintentional user-device interaction.

According to some examples, the method includes performing a second mitigation operation after confirming that the application was launched as the result of the unintentional user-device interaction at block 416. For example, the unintentional capture algorithm 230 illustrated in FIG. 2 may perform a second mitigation operation after confirming that the application was launched as the result of the unintentional user-device interaction. The second mitigation operation comprises closing the launched application and reducing the power consumption of the user device to a second power state. By closing the application, the user device can reduce the operation of one or more background processes, sensors and activities related to the application and the ISP 220.

By closing the application as part of the second mitigation operation, the user device mitigates potential battery loss stemming from unintentionally launched applications consuming significant power resources. Particularly in the case of applications, for example the camera application, unintentionally launched instances pose a risk of capturing unintended images and recordings, potentially breaching the user's privacy. Therefore, by promptly closing such applications, devices can prevent unauthorized image capture and recording, safeguarding user's privacy and conserving device battery life.

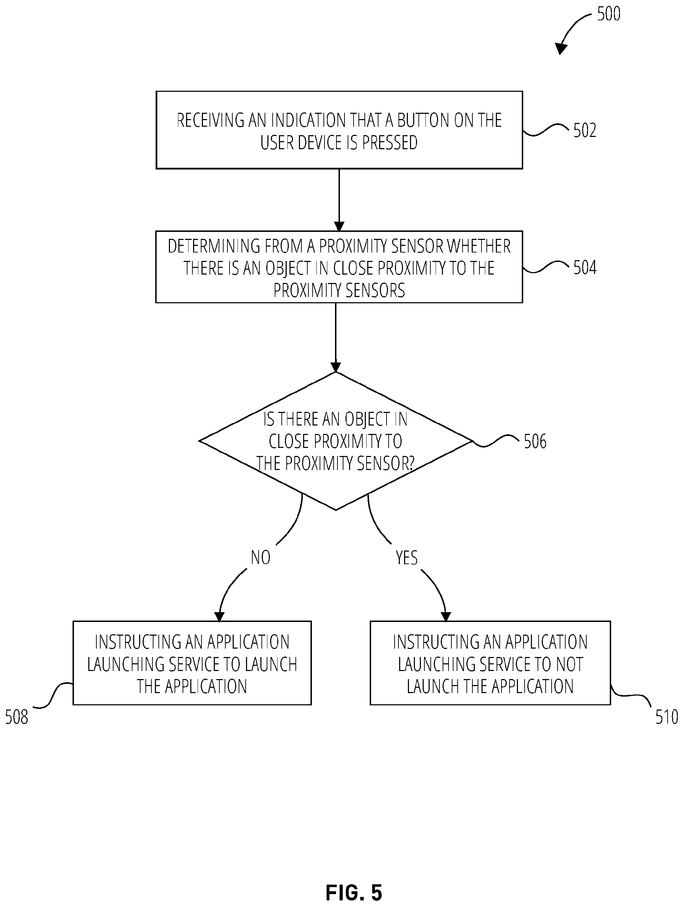

FIG. 5 illustrates an example process for launching a media capturing device in accordance with some embodiments of the present technology. Although the example process 500 depicts a particular sequence of operations, the sequence may be altered without departing from the scope of the present disclosure. For example, some of the operations depicted may be performed in parallel or in a different sequence that does not materially affect the function of the process 500. In other examples, different components of an example device or system that implements the process 500 may perform functions at substantially the same time or in a specific sequence.

According to some examples, the method includes receiving an indication that a button on the user device is pressed at block 502. For example, the PMU 216 illustrated in FIG. 2 may receive an indication that a physical button 218 on the user device is pressed, or the central processing unit 606 in FIG. 6 can determine that a software button was pressed. The button 218 can be configured to launch the camera application directly from a locked or unlocked screen state, ensuring users can quickly capture moments via the one or more media capturing devices without delay. A second click on button 218 can initiate a capture of the image after launching a camera application by the application launching service 206.

According to some examples, the method includes determining that a proximity sensor indicates that there is an object in close proximity to the proximity sensors at decision block 504. For example, the application launching service 206 illustrated in FIG. 2 may determine based on data from a proximity sensor 226 whether there is an object in close proximity to the proximity sensor 226. The close proximity determination is indicative of there is an object, that may not be a scene of potential interest, that is blocking the view of one or more media capturing devices.
According to some examples, at decision block 506, the method includes performing an analysis to identify whether an object is, in fact, in close proximity to the proximity sensor. At block 508, when the object is identified as being too close to the media capturing devices, the application launching service 206 can terminate the launching of the application. At block 510, when there is not an object that is in too close of a proximity to the proximity sensor 226, the application launching service 206 continues to launch the application. For example, the central processing unit 606 illustrated in FIG. 6 may cause application launching service 206 to initiate launching the application.

The application launching service 206 can immediately launch the application as soon as button 218 is contacted since the application launching service 206 can rely on the existence of the unintentional capture algorithm 230 to terminate the application if it is launched unintentionally. Even with proximity detection, the application can launch unintentionally if the proximity detection determination made at decision block 506 is thwarted, as can happen when a phone is being placed in a pocket such that there is no object close to the proximity sensor when the determination is made. Prior to the present technology, a button activation would need to last for a long enough duration of time to account for such dynamic situations where the proximity sensor might not detect a surface the first time but would detect a surface a short interval later. Unfortunately, this also delays the launch of the camera application, which is not ideal since photo opportunities can be fleeting.

FIG. 6 is a system diagram illustrating device 600 in accordance with some embodiments of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

Device 600 may perform various operations including image processing. For this and other purposes, the device 600 may include, among other components, image sensor 601, system-on-a system on a chip 602, system memory 617, persistent storage 616, motion sensor 619, and display 610.

Image sensor 601 is a component for capturing image data and may be embodied, for example, as a complementary metal-oxide-semiconductor (CMOS) active-pixel sensor) a camera, video camera, or other devices. Image sensor 601 generates raw image data that is sent to system on a chip 602 for further processing. In some embodiments, the image data processed by system on a chip 602 is displayed on display 610, stored in system memory 617, persistent storage 616 or sent to a remote computing device via network connection. The raw image data generated by image sensor 601 may be in a Bayer color filter array (CFA) pattern (hereinafter also referred to as "Bayer pattern").

Strobe controller 605 is a component for controlling variable features of strobe 604. Some attributes of the strobe 604 profile that can be adjusted include a strobe duration, a strobe strength, strobe spectrum, and an angular profile. For example, some strobe 604 devices can include strobes with adjustable intensities, and some strobe devices include multiple strobes, maybe with different emission spectra that can be activated independently to control an angular profile or spectrum of the light emitted from the strobe. An angular profile refers to the pattern and spread of light emitted from the strobe unit as it disperses over an area, as well as how this dispersion changes at different angles relative to the strobe. This can include how the intensity and distribution of light vary as one moves away from the central axis of the strobe, which is directly in front of it, towards the sides.

Motion sensor 619 is a component or a set of components for sensing motion of device 600. Motion sensor 619 may generate sensor signals indicative of orientation and/or acceleration of device 600. The sensor signals are sent to system on a chip 602 for various operations such rotating images displayed on display 610, and tracking motion of the image sensor 601 during image capture.

Display 610 is a component for displaying images as generated by system on a chip 602. Display 610 may include, for example, liquid crystal display (LCD) device or an organic light emitting diode (OLED) device. Based on data received from system on a chip 602, display 610 may display various images, such as menus, selected operating parameters, images captured by image sensor 601 and processed by system on a chip 602, and/or other information received from a user interface of device 600 (not shown).

System memory 617 is a component for storing instructions for execution by system on a chip 602 and for storing data processed by system on a chip 602. System memory 617 may be embodied as any type of memory including, for example, dynamic random access memory (DRAM), synchronous DRAM (SDRAM), double data rate (DDR, DDR2, DDR3, etc.) RAMBUS DRAM (RDRAM), static RAM (SRAM) or a combination thereof. In some embodiments, system memory 617 may store pixel data or other image data or statistics in various formats. System memory 617 can be accessible by many of the components of the system on a chip 602, including, but not limited to the central processing unit 606, graphics processing unit 612, and neural engine 620.

Persistent storage 616 is a component for storing data in a non-volatile manner. Persistent storage 616 retains data even when power is not available. Persistent storage 616 may be embodied as read-only memory (ROM), NAND or NOR strobe memory or other non-volatile random access memory devices.

System on a chip 602 is embodied as one or more integrated circuit (IC) chips and performs various data processing processes. System on a chip 602 may include, among other components, Image Signal Processor 603, one or more central processing unit 606, network interface 607, sensor interface 608, display controller 609, one or more graphics processing unit 612, memory controller 613, video encoder 614, storage controller 615, one or more neural engine 620 and various other input/output (I/O) I/O interfaces 611, and bus 618. Some components of system on a chip 602 can be connected directly to system memory 617, while other components are connected to other components by bus 618. System on a chip 602 may include more or fewer components than those shown in FIG. 6.

Image Signal Processor 603 (ISP) is hardware that performs various stages of an image processing pipeline. In some embodiments, Image Signal Processor 603 may receive raw image data from image sensor 601, and process the raw image data into a form that is usable by other subcomponents of system on a chip 602 or components of device 600. Image Signal Processor 603 may perform various image-manipulation operations such as image translation operations, horizontal and vertical scaling, color space conversion and/or image stabilization transformations, as described below in detail with reference to FIG. 2.

Central processing unit 606 (CPU) may be embodied using any suitable instruction set architecture, and may be configured to execute instructions defined in that instruction set architecture. Central processing unit 606 may be general-purpose or embedded processors using any of a variety of instruction set architectures (ISAs), such as the x86, PowerPC, SPARC, RISC, ARM or MIPS ISAs, or any other suitable ISA. Although a single CPU is illustrated in FIG. 6, system on a chip 602 may include multiple CPUs. In multiprocessor systems, each of the CPUs may commonly, but not necessarily, implement the same ISA.

Graphics processing unit 612 (GPU) is graphics processing circuitry for performing graphical data. For example, GPU may render objects to be displayed into a Frame buffer (e.g., one that includes pixel data for an entire Frame). Graphics processing unit 612 may include one or more graphics processors that may execute graphics software to perform a part or all of the graphics operation, or hardware acceleration of certain graphics operations.

The Always on Processor (AOP) 622 serves as a component in devices, enabling the execution of a real-time operating system, even when the central processing unit 606 is powered off or in sleep mode. Functioning as a distinct and energy-efficient processor, the AOP operates autonomously from the central processing unit 606, ensuring that specific functionalities remain accessible even in a "powered off" state. Tasked with managing various sensors and chips within the device, including the motion sensor, Bluetooth, and the ultra-wideband chip, the AOP facilitates seamless connectivity and operation. It possesses the capability to awaken the central processing unit 606 as required, effectively conserving battery life. The AOP 622 is empowered to execute critical tasks independently, ensuring uninterrupted functionality.

Neural engine 620 includes one or more processing cores optimized for machine learning tasks including training and inference tasks. Neural engine 620 enables rapid processing of artificial intelligence (AI) and machine learning (ML) operations. Neural engine 620 is optimized for tasks such as advanced image processing, natural language processing, and pattern recognition, significantly improving the efficiency and speed of AI-related processes. Its architecture is designed to support a wide range of machine learning models while being highly energy-efficient, thereby enhancing the user experience through faster, more responsive applications and functionalities that rely on AI and ML technologies.

I/O interfaces 611 are hardware, software, firmware or combinations thereof for interfacing with various input/output components in device 600. I/O components may include devices such as keypads, buttons, audio devices, and sensors such as a global positioning system. I/O interfaces 611 process data for sending data to such I/O components or process data received from such I/O components.

Network interface 607 is enables data to be exchanged between devices device 600 and other devices via one or more networks (e.g., carrier or agent devices). For example, video or other image data may be received from other devices via network interface 607 and be stored in system memory 617 for subsequent processing (e.g., via a back-end interface to Image Signal Processor 603, such as discussed below in FIG. 2) and display. The networks may include, but are not limited to, Local Area Networks (LANs) (e.g., an Ethernet or corporate network) and Wide Area Networks (WANs). The image data received via network interface 607 may undergo image processing processes by Image Signal Processor 603.

Sensor interface 608 is circuitry for interfacing with motion sensor 619. Sensor interface 608 receives sensor information from motion sensor 619 and processes the sensor information to determine the orientation or movement of the device 600.

Display controller 609 is circuitry for sending image data to be displayed on display 610. Display controller 609 receives the image data from Image Signal Processor 603, central processing unit 606, graphics processing unit 612 or system memory 617 and processes the image data into a format suitable for display on display 610.

Memory controller 613 is circuitry for communicating with system memory 617. Memory controller 613 may read data from system memory 617 for processing by Image Signal Processor 603, central processing unit 606, graphics processing unit 612 or other subcomponents of system on a chip 602. Memory controller 613 may also write data to system memory 617 received from various subcomponents of system on a chip 602.

Video encoder 614 is hardware, software, firmware or a combination thereof for encoding video data into a format suitable for storing in persistent storage 616 or for passing the data to network interface 607 for transmission over a network to another device.

In some embodiments, one or more components of system on a chip 602 or some functionality of these components may be performed by software components executed on Image Signal Processor 603, central processing unit 606, graphics processing unit 612. Such software components may be stored in system memory 617, persistent storage 616 or another device communicating with device 600 via network interface 607.

Image data or video data may flow through various data paths within system on a chip 602. In one example, raw image data may be generated from the image sensor 601 and processed by Image Signal Processor 603, and then sent to system memory 617. After the image data is stored in system memory 617, it may be accessed by graphics processing unit 612, neural engine 620, and/or video encoder 614 for encoding or display 610.

In another example, image data is received from sources other than the image sensor 601. For example, video data may be streamed, downloaded, or otherwise communicated to the system on a chip 602 via wired or wireless network. The image data may be received via network interface 607 and written to system memory 617 via memory controller 613. The image data may then be obtained from system memory 617 and processed Image Signal Processor 603, graphics processing unit 612, or neural engine 620. The image data may then be returned to system memory 617.

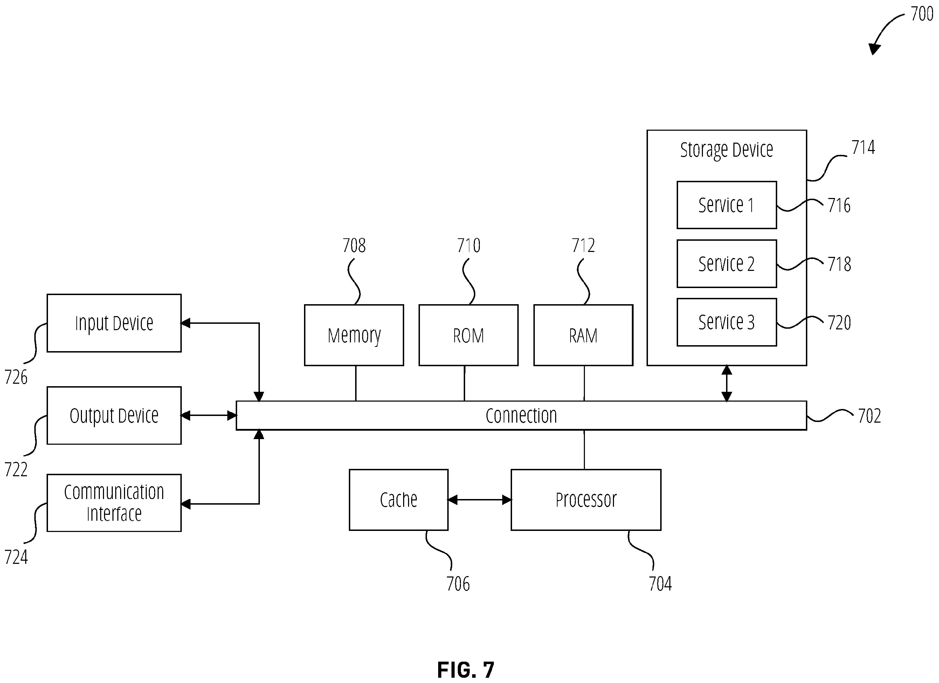

FIG. 7 shows an example of computing system 700, which can be for example any computing device making up an AOP, application launching service 206, or any component thereof in which the components of the system are in communication with each other using connection 702. Connection 702 can be a physical connection via a bus, or a direct connection into processor 704, such as in a chipset architecture. Connection 702 can also be a virtual connection, networked connection, or logical connection.

In some embodiments, computing system 700 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 700 includes at least one processing unit (CPU or processor) 704 and connection 702 that couples various system components including system memory 708, such as read-only memory (ROM) 710 and random access memory (RAM) 712 to processor 704. Computing system 700 can include a cache of high-speed memory 708 connected directly with, in close proximity to, or integrated as part of processor 704.

Processor 704 can include any general purpose processor and a hardware service or software service, such as services 716, 718, and 720 stored in storage device 714, configured to control processor 704 as well as a special-purpose processor where software instructions are incorporated into the actual processor design. Processor 704 may essentially be a completely self-contained computing system, containing multiple cores or processors, a bus, memory controller, cache, etc. A multi-core processor may be symmetric or asymmetric.

To enable user interaction, computing system 700 includes an input device 726, which can represent any number of input mechanisms, such as a microphone for speech, a touch-sensitive screen for gesture or graphical input, keyboard, mouse, motion input, speech, etc. Computing system 700 can also include output device 722, which can be one or more of a number of output mechanisms known to those of skill in the art. In some instances, multimodal systems can enable a user to provide multiple types of input/output to communicate with computing system 700. Computing system 700 can include communication interface 724, which can generally govern and manage the user input and system output. There is no restriction on operating on any particular hardware arrangement, and therefore the basic features here may easily be substituted for improved hardware or firmware arrangements as they are developed.

Storage device 714 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 714 can include software services, servers, services, etc., that when the code that defines such software is executed by the processor 704, it causes the system to perform a function. In some embodiments, a hardware service that performs a particular function can include the software component stored in a computer-readable medium in connection with the necessary hardware components, such as processor 704, connection 702, output device 722, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a user device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

For clarity of explanation, in some instances, the present technology may be presented as including individual functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in the memory of a user device and/or one or more servers of a content management system and performs one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data that cause or otherwise configure a general-purpose computer, special-purpose computer, or special-purpose processing device to perform a certain function or group of functions. Portions of computer resources used can be accessible over a network. The computer-executable instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein can also be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Some aspects of the present technology include:
Clause 1. A method for detecting that an application launch was initiated as a result of an unintentional user-device interaction, the method comprising: receiving an indication that the application is launched and one or more media capturing devices on a user device are capturing one or more streams or frames of an area surrounding the user device; analyzing the one or more streams from the one or more media capturing devices on the user device, wherein metrics are determined from the analyzed one or more streams; determining that the application was launched as the result of the unintentional user-device interaction when the metrics indicate that the one or more of the media capturing devices are experiencing an obstruction; performing a first mitigation operation after determining that the application was launched as the result of the unintentional user-device interaction, wherein the first mitigation operation comprises reducing a power state of the user device to a first power state, and dimming a display of the user device; after initiating the first mitigation operations, monitoring a user interface to identify one or more user interactions indicative of a user intent to launch the application or capture one or more frames using the application; when a period expires without receiving the one or more user interactions, concluding that the application was launched as the result of the unintentional user-device interaction; and performing a second mitigation operation after concluding that the application was launched as the result of the unintentional user-device interaction, the second mitigation operation comprising closing the launched application, and reducing a power consumption of the user device to a second power state.
Clause 2. The method of clause 1, further comprising: analyzing a signal received from one or more sensors of the user device to identify a presence of an obstruction in the area surrounding the user device.
Clause 3. The method of clause 1 to 2, further comprising: after initiating the first mitigation operations, continuing the analyzing of the one or more streams from the one or more media capturing devices to detect whether the one or more streams begins to include an object or scene of potential interest, wherein the concluding that the application was launched as a result of the unintentional user-device interaction includes the period expiring without receiving a user interaction and that one or more streams do not include the object or the scene of potential interest.
Clause 4. The method of clause 1 to 3, wherein in addition to analyzing the one or more streams determining that data from a proximity sensor indicates that the user device is in close proximity to an object, which is also indicative of the application being application was launched as a result of an unintentional user-device interaction.
Clause 5. The method of clause 1 to 4, further comprising: identifying, from the one or more streams, a frame comprising media captured from the one or more media capturing device; extracting frequencies from the media in the identified frame, wherein the frequencies are analyzed to determine whether the frequencies have met criteria associated with identification of an object or scene of potential interest; and upon determining that the frequencies exceed a threshold indicating that the media in the frame is meaningless, initiating obstruction detection to determine whether an obstruction is detected that indicates inadvertent launching of the application.
Clause 6. The method of clause 1 to 5, wherein the metrics extracted from the one or more streams includes one or more sensor metrics including: an estimated light intensity noise level, and sensor gain detected in the one or more streams; wherein after determining that the one or more sensor metrics has met a set of criteria, determining that the obstruction is in close proximity to the user device.
Clause 7. The method of clause 1 to 6, further comprising: initiating the dimming of the display of the user device in response to the performing of a first mitigation operation; in response to the dimming of the display, detecting a user interaction with the user device, the interaction including one or more of an interaction with a physical button, software button or application icon on the display of the user device; in response to the user interaction, launching the application and exiting the first mitigation operation.
Clause 8. The method of clause 1 to 7, wherein receiving an indication that the application is launched includes: determining which of the one or more media capturing devices are active on the user device; receiving data from the active media capturing device about an object or scene of potential interest surrounding the user device.
Clause 9. The method of clause 1 to 8, wherein the metrics extracted from the streams include metadata associated with one or more of the media capturing device, and one or more sensors including a proximity sensor, an accelerometer, and a gyroscope.
Clause 10. The method of clause 1 to 9, wherein the monitoring of the one or more streams to identify user interactions includes analyzing gestures detected by the media capturing device to distinguish between intentional and unintended interactions.
Clause 11. The method of clause 1 to 10, wherein the monitoring of the user interface includes user interactions with a physical button or software button to identify the user intent to launch the application or capture the one or more frames using the application.
Clause 12. The method of clause 1 to 11, further comprising: receiving an indication that a button on the user device is pressed, wherein the button is a physical button or software button configured to initiate the launch of the application; causing an application launching service to initiate launching the application; determining from a proximity sensor whether there is an object in close proximity to the proximity sensors or there is an obstruction that causes an inability to capture one or more images; and after determining that the object is in close proximity to the proximity sensor, instructing an application launching service to terminate launching the application.

Exemplary embodiments of the present disclosure are set out in the following items:
1. A method for detecting that an application launch was initiated as a result of an unintentional user-device interaction, the method comprising:
   receiving an indication that the application is launched and one or more media capturing devices on a user device are capturing one or more streams or frames of an area surrounding the user device;
   analyzing the one or more streams from the one or more media capturing devices on the user device, wherein metrics are determined from the analyzed one or more streams;
   determining that the application was launched as the result of the unintentional user-device interaction when the metrics indicate that the one or more of the media capturing devices are experiencing an obstruction;
   performing a first mitigation operation after determining that the application was launched as the result of the unintentional user-device interaction, wherein the first mitigation operation comprises reducing a power state of the user device to a first power state, and dimming a display of the user device;
   after initiating the first mitigation operations, monitoring a user interface to identify one or more user interactions indicative of a user intent to launch the application or capture one or more frames using the application;
   when a period expires without receiving the one or more user interactions, concluding that the application was launched as the result of the unintentional user-device interaction; and
   performing a second mitigation operation after concluding that the application was launched as the result of the unintentional user-device interaction, the second mitigation operation comprising closing the launched application, and reducing a power consumption of the user device to a second power state.
2. The method of item 1, further comprising:
   analyzing a signal received from one or more sensors of the user device to identify a presence of an obstruction in the area surrounding the user device.
3. The method of any of items 1-2, further comprising:
   after initiating the first mitigation operations, continuing the analyzing of the one or more streams from the one or more media capturing devices to detect whether the one or more streams begins to include an object or scene of potential interest,
   wherein the concluding that the application was launched as a result of the unintentional user-device interaction includes the period expiring without receiving a user interaction and that one or more streams do not include the object or the scene of potential interest.
4. The method of any of items 1-3, wherein in addition to analyzing the one or more streams determining that data from a proximity sensor indicates that the user device is in close proximity to an object, which is also indicative of the application being application was launched as a result of an unintentional user-device interaction.
5. The method of any of items 1-4, further comprising:
   identifying, from the one or more streams, a frame comprising media captured from the one or more media capturing device;
   extracting frequencies from the media in the identified frame, wherein the frequencies are analyzed to determine whether the frequencies have met criteria associated with identification of an object or scene of potential interest; and
   upon determining that the frequencies exceed a threshold indicating that the media in the frame is meaningless, initiating obstruction detection to determine whether an obstruction is detected that indicates inadvertent launching of the application.
6. The method of any of items 1-5, wherein the metrics extracted from the one or more streams includes one or more sensor metrics including:
   an estimated light intensity noise level, and sensor gain detected in the one or more streams;
   wherein
   after determining that the one or more sensor metrics has met a set of criteria, determining that the obstruction is in close proximity to the user device.
7. The method of any of items 1-6, further comprising:
   initiating the dimming of the display of the user device in response to the performing of a first mitigation operation;
   in response to the dimming of the display, detecting a user interaction with the user device, the interaction including one or more of an interaction with a physical button, software button or application icon on the display of the user device;
   in response to the user interaction, launching the application and exiting the first mitigation operation.
8. The method of any of items 1-7, wherein receiving an indication that the application is launched includes:
   determining which of the one or more media capturing devices are active on the user device;
   receiving data from the active media capturing device about an object or scene of potential interest surrounding the user device.
9. The method of any of items 1-8, wherein the metrics extracted from the streams include metadata associated with one or more of the media capturing device, and one or more sensors including a proximity sensor, an accelerometer, and a gyroscope.
10. The method of any of items 1-9, wherein the monitoring of the one or more streams to identify user interactions includes analyzing gestures detected by the media capturing device to distinguish between intentional and unintended interactions.
11. The method of any of items 1-10, wherein the monitoring of the user interface includes user interactions with a physical button or software button to identify the user intent to launch the application or capture the one or more frames using the application.
12. The method of any of items 1-11, further comprising:
   receiving an indication that a button on the user device is pressed, wherein the button is a physical button or software button configured to initiate the launch of the application;
   causing an application launching service to initiate launching the application;
   determining from a proximity sensor whether there is an object in close proximity to the proximity sensors or there is an obstruction that causes an inability to capture one or more images; and
   after determining that the object is in close proximity to the proximity sensor, instructing an application launching service to terminate launching the application.
13. A computer-readable medium comprising instructions, the instructions, when executed by a computing system, cause the computing system to:
   receive an indication that an application is launched and one or more media capturing devices on a user device are capturing one or more streams or frames of an area surrounding the user device;
   analyze the one or more streams from the one or more media capturing devices on the user device, wherein metrics are determined from the analyzed one or more streams;
   determine that the application was launched as a result of an unintentional user-device interaction when the metrics indicate that the one or more of the media capturing devices are experiencing an obstruction;
   perform a first mitigation operation after determining that the application was launched as the result of the unintentional user-device interaction, wherein the first mitigation operation comprises reducing a power state of the user device to a first power state, and dimming a display of the user device;
   after initiating the first mitigation operations, monitor a user interface to identify one or more user interactions indicative of a user intent to launch the application or capture one or more frames using the application;
   when a period expires without receiving the one or more user interactions, conclude that the application was launched as the result of the unintentional user-device interaction; and
   perform a second mitigation operation after concluding that the application was launched as the result of the unintentional user-device interaction, the second mitigation operation comprising undoing the application launch, and reducing a power consumption of the user device to a second power state.
14. The computer-readable medium of item 13, wherein the computer-readable medium further comprises instructions that, when executed by the computing system, cause the computing system to:
   analyze a signal received from one or more sensors of the user device to identify a presence of an obstruction in the area surrounding the user device.
15. The computer-readable medium of any of items 13-14, wherein the computer-readable medium further comprises instructions that, when executed by the computing system, cause the computing system to:
   after initiating the first mitigation operations, continue the analyzing of the one or more streams from the one or more media capturing devices to detect whether the one or more streams begins to include an object or scene of potential interest,
   wherein the concluding that the application was launched as a result of the unintentional user-device interaction includes the period expiring without receiving a user interaction and that one or more streams do not include the object or the scene of potential interest.
16. The computer-readable medium of any of items 13-15, wherein in addition to analyzing the one or more streams determining that data from a proximity sensor indicates that the user device is in close proximity to an object, which is also indicative of the application being launched as a result of an unintentional user-device interaction.
17. The computer-readable medium of any of items 13-16, wherein the computer-readable medium further comprises instructions that, when executed by the computing system, cause the computing system to:
   identify, from the one or more streams, a frame comprising media captured from the one or more media capturing device;
   extract frequencies from the media in the identified frame, wherein the frequencies are analyzed to determine whether the frequencies have met a set of criteria associated with identification of an object or scene of potential interest; and
   upon determining that the frequencies has met the set of criteria indicating that the media in the frame is meaningless, initiating obstruction detection to determine whether an obstruction is detected that indicates inadvertent launching of the application.
18. The computer-readable medium of any of items 13-17, wherein:
   the metrics extracted from the one or more streams includes one or more sensor metrics including an estimated light intensity noise level, and sensor gain detected in the one or more streams;
   wherein upon determining that the one or more sensor metrics meets a set of criteria for identifying an object or scene of potential interest, determining that the obstruction is in close proximity to the user device.
19. The computer-readable medium of any of items 13-18, wherein the computer-readable medium further comprises instructions that, when executed by the computing system, cause the computing system to:
   initiate the dimming of the display of the user device in response to the performing of a first mitigation operation;
   in response to the dimming of the display, detect a user interaction with the user device, the interaction including one or more of an interaction with a physical button, software button or application icon on the display of the user device;
   in response to the user interaction, launch the application and exiting the first mitigation operation.
20. The computer-readable medium of any of items 13-19, wherein the computer-readable medium further comprises instructions that, when executed by the computing system, cause the computing system to:
   determine which of the one or more media capturing device are active on the user device;
   receive data from an active capturing device object or scene of potential interest surrounding the user device.
21. The computer-readable medium of any of items 13-20, wherein the monitoring of the user interface includes user interactions with a physical button or software button to identify the user intent to launch the application or capture the one or more Frames using the application.
22. A computing system comprising:
   a processor; and
   a memory storing instructions that, when executed by the processor, configure the computing system to:
      receive an indication that an application is launched and one or more media capturing devices on a user device are capturing one or more streams or frames of an area surrounding the user device;
      analyze one or more streams from the one or more media capturing devices on the user device, wherein metrics are determined from the analyzed one or more streams;
      determine that the application was launched as a result of an unintentional user-device interaction when the metrics indicate that the one or more of the media capturing devices are experiencing an obstruction;
      perform a first mitigation operation after determining that the application was launched as the result of the unintentional user-device interaction, wherein the first mitigation operation comprises reducing a power state of the user device to a first power state, and dimming a display of the user device;
      after initiating the first mitigation operations, monitor a user interface to identify one or more user interactions indicative of a user intent to launch the application or capture one or more frames using the application;
      when a period expires without receiving the one or more user interactions, conclude that the application was launched as the result of the unintentional user-device interaction; and
      perform a second mitigation operation after concluding that the application was launched as the result of the unintentional user-device interaction, the second mitigation operation comprising undoing the application launch, and reducing a power consumption of the user device to a second power state.
23. The computing system of item 22, further configured to:
   analyze a signal received from one or more sensors of the user device to identify a presence of an obstruction in the area surrounding the user device.
24. The computing system of any of items 22-23, further configured to:
   receive an indication that a button on the user device is pressed, wherein the button is a physical button or software button configured to initiate the launch of the application;
   determine from the one or more sensors whether there is an object in close proximity to the proximity sensors or there is an obstruction that causes an inability to capture one or more images, the close proximity determination being indicative of there not being a scene of potential interest to be captured by the one or more media capturing devices; and
   upon determining that the object is not in close proximity to the proximity sensor, instruct an application launching service to launch the application or not.

## Claims

1. A method for detecting that an application launch was initiated as a result of an unintentional user-device interaction, the method comprising:
receiving an indication that the application is launched and one or more media capturing devices on a user device are capturing one or more streams or frames of an area surrounding the user device;
analyzing the one or more streams from the one or more media capturing devices on the user device, wherein metrics are determined from the analyzed one or more streams;
determining that the application was launched as the result of the unintentional user-device interaction when the metrics indicate that the one or more of the media capturing devices are experiencing an obstruction;
performing a first mitigation operation after determining that the application was launched as the result of the unintentional user-device interaction, wherein the first mitigation operation comprises reducing a power state of the user device to a first power state, and dimming a display of the user device;
after initiating the first mitigation operations, monitoring a user interface to identify one or more user interactions indicative of a user intent to launch the application or capture one or more frames using the application;
when a period expires without receiving the one or more user interactions, concluding that the application was launched as the result of the unintentional user-device interaction; and
performing a second mitigation operation after concluding that the application was launched as the result of the unintentional user-device interaction, the second mitigation operation comprising closing the launched application, and reducing a power consumption of the user device to a second power state.

2. The method of claim 1, further comprising:
analyzing a signal received from one or more sensors of the user device to identify a presence of an obstruction in the area surrounding the user device.

3. The method of any of claims 1-2, further comprising:
after initiating the first mitigation operations, continuing the analyzing of the one or more streams from the one or more media capturing devices to detect whether the one or more streams begins to include an object or scene of potential interest,
wherein the concluding that the application was launched as a result of the unintentional user-device interaction includes the period expiring without receiving a user interaction and that one or more streams do not include the object or the scene of potential interest.

4. The method of any of claims 1-3, wherein in addition to analyzing the one or more streams determining that data from a proximity sensor indicates that the user device is in close proximity to an object, which is also indicative of the application being application was launched as a result of an unintentional user-device interaction.

5. The method of any of claims 1-4, further comprising:
identifying, from the one or more streams, a frame comprising media captured from the one or more media capturing device;
extracting frequencies from the media in the identified frame, wherein the frequencies are analyzed to determine whether the frequencies have met criteria associated with identification of an object or scene of potential interest; and
upon determining that the frequencies exceed a threshold indicating that the media in the frame is meaningless, initiating obstruction detection to determine whether an obstruction is detected that indicates inadvertent launching of the application.

6. The method of any of claims 1-5, wherein the metrics extracted from the one or more streams includes one or more sensor metrics including:
an estimated light intensity noise level, and sensor gain detected in the one or more streams;
wherein
after determining that the one or more sensor metrics has met a set of criteria, determining that the obstruction is in close proximity to the user device.

7. The method of any of claims 1-6, further comprising:
initiating the dimming of the display of the user device in response to the performing of a first mitigation operation;
in response to the dimming of the display, detecting a user interaction with the user device, the interaction including one or more of an interaction with a physical button, software button or application icon on the display of the user device;
in response to the user interaction, launching the application and exiting the first mitigation operation.

8. The method of any of claims 1-7, wherein receiving an indication that the application is launched includes:
determining which of the one or more media capturing devices are active on the user device;
receiving data from the active media capturing device about an object or scene of potential interest surrounding the user device.

9. The method of any of claims 1-8, wherein the metrics extracted from the streams include metadata associated with one or more of the media capturing device, and one or more sensors including a proximity sensor, an accelerometer, and a gyroscope.

10. The method of any of claims 1-9, wherein the monitoring of the one or more streams to identify user interactions includes analyzing gestures detected by the media capturing device to distinguish between intentional and unintended interactions.

11. The method of any of claims 1-10, wherein the monitoring of the user interface includes user interactions with a physical button or software button to identify the user intent to launch the application or capture the one or more frames using the application.

12. The method of any of claims 1-11, further comprising:
receiving an indication that a button on the user device is pressed, wherein the button is a physical button or software button configured to initiate the launch of the application;
causing an application launching service to initiate launching the application;
determining from a proximity sensor whether there is an object in close proximity to the proximity sensors or there is an obstruction that causes an inability to capture one or more images; and
after determining that the object is in close proximity to the proximity sensor, instructing an application launching service to terminate launching the application.

13. A computer-readable medium comprising instructions, the instructions, when executed by a computing system, cause the computing system to:
receive an indication that an application is launched and one or more media capturing devices on a user device are capturing one or more streams or frames of an area surrounding the user device;
analyze the one or more streams from the one or more media capturing devices on the user device, wherein metrics are determined from the analyzed one or more streams;
determine that the application was launched as a result of an unintentional user-device interaction when the metrics indicate that the one or more of the media capturing devices are experiencing an obstruction;
perform a first mitigation operation after determining that the application was launched as the result of the unintentional user-device interaction, wherein the first mitigation operation comprises reducing a power state of the user device to a first power state, and dimming a display of the user device;
after initiating the first mitigation operations, monitor a user interface to identify one or more user interactions indicative of a user intent to launch the application or capture one or more frames using the application;
when a period expires without receiving the one or more user interactions, conclude that the application was launched as the result of the unintentional user-device interaction; and
perform a second mitigation operation after concluding that the application was launched as the result of the unintentional user-device interaction, the second mitigation operation comprising undoing the application launch, and reducing a power consumption of the user device to a second power state.

14. A computing system comprising:
a processor; and
a memory storing instructions that, when executed by the processor, configure the computing system to:
receive an indication that an application is launched and one or more media capturing devices on a user device are capturing one or more streams or frames of an area surrounding the user device;
analyze one or more streams from the one or more media capturing devices on the user device, wherein metrics are determined from the analyzed one or more streams;
determine that the application was launched as a result of an unintentional user-device interaction when the metrics indicate that the one or more of the media capturing devices are experiencing an obstruction;
perform a first mitigation operation after determining that the application was launched as the result of the unintentional user-device interaction, wherein the first mitigation operation comprises reducing a power state of the user device to a first power state, and dimming a display of the user device;
after initiating the first mitigation operations, monitor a user interface to identify one or more user interactions indicative of a user intent to launch the application or capture one or more frames using the application;
when a period expires without receiving the one or more user interactions, conclude that the application was launched as the result of the unintentional user-device interaction; and
perform a second mitigation operation after concluding that the application was launched as the result of the unintentional user-device interaction, the second mitigation operation comprising undoing the application launch, and reducing a power consumption of the user device to a second power state.

15. The computing system of claim 14, further configured to:
receive an indication that a button on the user device is pressed, wherein the button is a physical button or software button configured to initiate the launch of the application;
determine from the one or more sensors whether there is an object in close proximity to the proximity sensors or there is an obstruction that causes an inability to capture one or more images, the close proximity determination being indicative of there not being a scene of potential interest to be captured by the one or more media capturing devices; and
upon determining that the object is not in close proximity to the proximity sensor, instruct an application launching service to launch the application or not.
